# FASCICULE DE BREVET EUROPEEN

(11) **EP 4 107 369 B1**
(45) Date de publication et mention de la délivrance du brevet: **21.02.2024**
(21) Numéro de dépôt: 21716485.4
(22) Date de dépôt: 09.03.2021
(51) Int. Cl.: F01D 5/18

(54) **AUBE DE TURBINE COMPORTANT TROIS TYPES D'ORIFICES DE REFROIDISSEMENT DU BORD DE FUITE**
TURBINENSCHAUFEL MIT DREI ARTEN VON ÖFFNUNGEN ZUR KÜHLUNG DER ABSTRÖMKANTE
TURBINE BLADE COMPRISING THREE TYPES OF ORIFICES FOR COOLING THE TRAILING EDGE

(30) Priorité: 18.03.2020 FR 2002664
(43) Date de publication de la demande: 28.12.2022
(73) Titulaire: SAFRAN AIRCRAFT ENGINES, 75015 Paris (FR)
(72) Inventeur: OSTINO, Léandre, 77550 MOISSY-CRAMAYEL (FR); PAGNONI, Filippo, 77550 MOISSY-CRAMAYEL (FR)
(74) Mandataire: Brevalex
(86) Numéro de dépôt international: PCT/FR2021/050392
(87) Numéro de publication internationale: WO 2021/186121

(56) Documents cités:
- EP-A1- 2 685 049
- EP-A1- 3 123 000
- EP-A1- 3 255 245
- JP-A- H 062 502
- JP-A- 2002 221 005
- US-A1- 2018 112 533

## Description

### DOMAINE TECHNIQUE

La présente invention se rapporte au domaine général du refroidissement des aubes de turbine de turbomachine, et plus particulièrement au domaine du refroidissement des aubes mobiles de turbine pour turbomachine.

L'invention s'applique à tout type de turbomachines aéronautiques ou terrestres. Elle peut notamment être appliquée aux aubes mobiles de turbine de turbomachines d'aéronef telles que les turboréacteurs et les turbopropulseurs, par exemple à double flux. Elle peut encore être appliquée aux aubes mobiles de turbine à gaz industrielle. L'invention concerne en outre préférentiellement le refroidissement d'aubes mobiles de turbine haute pression, mais s'applique également au refroidissement d'aubes mobiles de turbine basse pression et/ou de pression intermédiaire.

### ÉTAT DE LA TECHNIQUE ANTÉRIEURE

Afin de concevoir des moteurs de plus en plus performants et à consommation réduite, il a été développé des aubes de turbine de taille de plus en plus réduite et résistantes à des contraintes thermiques et mécaniques de plus en plus importantes telles que la température, la pression, la vitesse de rotation, entre autres.

Il est en effet connu que les aubes d'une turbine à gaz de turbomachine, et notamment de la turbine haute-pression, sont soumises aux températures élevées des gaz de combustion pendant le fonctionnement du moteur. Ces températures atteignent des valeurs largement supérieures à celles que peuvent supporter sans dommages les différentes pièces qui sont en contact avec ces gaz, ce qui a pour conséquence de limiter leur durée de vie.

Il est également connu qu'une élévation de la température des gaz de la turbine haute-pression permet d'améliorer le rendement d'une turbomachine, donc le rapport entre la poussée du moteur et le poids d'un avion propulsé par cette turbomachine. Par conséquent, des efforts ont été entrepris afin de réaliser des aubes de turbine qui peuvent résister à des températures de plus en plus élevées. De plus, l'amélioration des aubes de turbine vise à diminuer la consommation en carburant du moteur.

Une des solutions existantes aujourd'hui pour améliorer les aubes, et notamment améliorer la tenue mécanique des aubes, est de diminuer leur température de fonctionnement en rendant plus efficient le refroidissement. Ce refroidissement est notamment obtenu par le biais de circuits de refroidissement prévus dans les aubes visant à réduire la température de ces dernières. Grâce à de tels circuits, de l'air de refroidissement, qui est généralement introduit dans l'aube par son pied, traverse celle- ci en suivant un trajet formé par des cavités pratiquées dans l'aube avant d'être éjecté par des orifices (ou perçages) s'ouvrant à la surface de l'aube, et en particulier au niveau du bord de fuite de l'aube. L'amélioration du circuit de refroidissement d'une aube permet de diminuer le débit d'air nécessaire à son refroidissement et permet également d'augmenter la durée de vie des aubes et/ou d'assurer la tenue d'un objectif de durée de vie dans un contexte d'augmentation de la température en entrée de l'étage de turbine.

Par ailleurs, l'amélioration des aubes est également rendue possible par l'amélioration du profil aérodynamique afin d'augmenter le rendement de l'aube.

Des solutions ont déjà été décrites dans l'art antérieur visant à améliorer le refroidissement et le profil aérodynamique au niveau du bord de fuite d'une aube mobile de turbine haute pression. A titres d'exemples, la demande de brevet français FR 3 041 989 A1 divulgue le refroidissement du bord de fuite d'une aube de turbine haute pression par le biais de trois régions de refroidissement distinctes. La demande de brevet français FR 2 864 990 A1 décrit des solutions de perfectionnement apporté aux fentes d'évacuation de l'air de refroidissement au niveau du bord de fuite d'une aube de turbine haute pression.

Cependant, il subsiste un besoin pour améliorer encore l'efficacité de refroidissement au niveau du bord de fuite d'une aube de turbine, afin notamment d'en garantir la tenue mécanique, et pour disposer d'un profil aérodynamique amélioré permettant de maximiser le rendement aérodynamique.

EP 2 685 049 A1 divulgue une aube de turbine comportant des rangées d'orifices de refroidissement le long du bord de fuite.

### EXPOSÉ DE L'INVENTION

L'invention a donc pour but de remédier au moins partiellement aux besoins mentionnés ci-dessus et aux inconvénients relatifs aux réalisations de l'art antérieur.

L'invention a ainsi pour objet, selon l'un de ses aspects, une aube de turbine de turbomachine, destinée à être montée autour d'un axe de rotation, comportant une plateforme, notamment une plateforme intérieure, et une pale s'étendant dans une direction radiale par rapport à l'axe de rotation, en allant de l'intérieur vers l'extérieur en éloignement de la plateforme et en se terminant par un sommet, la pale comprenant un bord d'attaque et un bord de fuite, situé en aval du bord d'attaque, et la pale comprenant une paroi d'intrados et une paroi d'extrados reliant chacune le bord d'attaque au bord de fuite, la paroi d'intrados et la paroi d'extrados étant reliées entre elles au niveau du bord de fuite par un congé de raccordement de bord de fuite,
caractérisée en ce qu'elle comporte, une zone de refroidissement qui s'étend le long du bord de fuite, la zone de refroidissement comprenant trois types distincts d'orifices de refroidissement formés au travers de la paroi de la pale pour permettre la circulation d'un flux de refroidissement depuis l'intérieur vers l'extérieur de la pale, ces trois types d'orifices de refroidissement étant espacés les uns des autres radialement entre la plateforme et le sommet,
en ce que l'aube comporte, dans la zone en pied d'aube à proximité de la plateforme, un premier type d'orifices de refroidissement sous la forme de premiers orifices de refroidissement formés dans l'épaisseur du congé de raccordement de bord de fuite entre les parois d'intrados et d'extrados,
en ce que l'aube comporte, dans la zone en sommet d'aube à proximité du sommet, un troisième type d'orifices de refroidissement sous la forme de troisièmes orifices de refroidissement, distincts des premiers orifices, formés dans l'épaisseur de l'une au moins des parois d'intrados et d'extrados,
en ce que l'aube comporte, dans la zone en milieu d'aube, située entre la zone en pied d'aube et la zone en sommet d'aube, un deuxième type d'orifices de refroidissement sous la forme de deuxièmes orifices de refroidissement, distincts des premiers orifices et des troisièmes orifices, formés dans l'épaisseur de ladite l'une au moins des parois d'intrados et d'extrados,
en ce que, la zone de refroidissement du bord de fuite, la paroi d'intrados, la paroi d'extrados et le congé de raccordement de bord de fuite présentent globalement la forme d'un dièdre dont la forme est caractérisée par le rayon du congé de raccordement de bord de fuite et l'espacement, à l'opposé du bord de fuite, entre la paroi d'intrados et la paroi d'extrados, et en ce que l'espacement entre les parois d'intrados et d'extrados et le rayon du congé de raccordement de bord de fuite sont évolutifs radialement entre la plateforme et le sommet de l'aube.

Autrement dit, les valeurs de l'espacement et du rayon de congé de raccordement de bord de fuite évoluent dans la direction radiale. Ainsi, elles ne sont pas constantes sur toute la hauteur de l'aube, entre plateforme et sommet.

Grâce à l'invention, il est possible de disposer d'une triple configuration de refroidissement au niveau du bord de fuite d'une aube de turbine pour turbomachine et d'obtenir un profil aérodynamique amélioré de l'aube. En particulier, il est ainsi possible de diminuer la consommation en carburant de la turbomachine en diminuant le débit nécessaire au refroidissement des aubes, notamment des aubes de turbine haute pression, avec la même durée de vie qu'une aube de turbine intégrant un circuit de refroidissement classique. En outre, il est possible d'augmenter le rendement aérodynamique, notamment celui de l'étage de turbine haute pression, en permettant de définir un dièdre au bord de fuite aux dimensions adaptées en fonction de la hauteur, par rapport à une aube intégrant une technologie de refroidissement classique au bord de fuite. De plus, il est possible d'augmenter la durée de vie des aubes, notamment des aubes de turbine haute pression, par rapport à des aubes intégrant une solution classique de refroidissement du bord de fuite, par exemple des fentes en bord de fuite.

L'aube de turbine selon l'invention peut en outre comporter une ou plusieurs des caractéristiques suivantes prises isolément ou suivant toutes combinaisons techniques possibles.

Les deuxièmes et troisièmes orifices de refroidissement peuvent préférentiellement être formés dans l'épaisseur de la paroi d'intrados.

Par ailleurs, les premiers, les deuxièmes et les troisièmes orifices de refroidissement peuvent comporter chacun un type différent d'orifices de refroidissement choisi parmi des perçages de forme circulaire en section, ou de forme oblongue en section, ou sous forme de fente.

En particulier, les premiers orifices de refroidissement peuvent comporter des perçages, notamment de forme circulaire et/ou oblongue en section, les deuxièmes orifices de refroidissement peuvent comporter les uns de fentes de refroidissement, notamment de forme rectangulaire ou oblongue en section, et de perçages, notamment de forme circulaire en section, et les troisièmes orifices de refroidissement peuvent comporter les autres de fentes de refroidissement et de perçages.

En particulier, les premiers orifices de refroidissement peuvent comporter des perçages, notamment de forme circulaire et/ou oblongue en section, les deuxièmes orifices de refroidissement peuvent comporter des fentes de refroidissement, notamment de forme rectangulaire ou oblongue en section, et les troisièmes orifices de refroidissement peuvent comporter des perçages, notamment de forme circulaire en section.

En variante, les premiers orifices de refroidissement peuvent comporter des perçages, notamment de forme circulaire et/ou oblongue en section, les deuxièmes orifices de refroidissement peuvent comporter des perçages, notamment de forme circulaire en section, et les troisièmes orifices de refroidissement peuvent comporter des fentes de refroidissement, notamment de forme rectangulaire ou oblongue en section.

Les premiers orifices de refroidissement peuvent préférentiellement comporter des perçages de forme circulaire en section. Leur diamètre peut être compris entre 0,15 mm et 0,50 mm.

En outre, le pas radial des premiers orifices, correspondant à la dimension radiale entre deux premiers orifices adjacents et mesuré du centre de la section de sortie d'un premier orifice au centre de la section de sortie du premier orifice adjacent, peut être compris entre 1,5 et 5 fois la dimension radiale d'un premier orifice, notamment son diamètre.

De plus, la hauteur radiale de la zone en pied d'aube comprenant les premiers orifices de refroidissement peut être inférieure ou égale à 40 %, notamment 20 %, de la hauteur radiale de la pale, correspondant à la dimension radiale de la pale entre la plateforme et le sommet.

Par ailleurs, la hauteur radiale de la zone en sommet d'aube comprenant les troisièmes orifices de refroidissement peut être inférieure ou égale à 30 % de la hauteur radiale de la pale, correspondant à la dimension radiale de la pale entre la plateforme et le sommet.

Avantageusement, l'espacement entre les parois d'intrados et d'extrados et le rayon du congé de raccordement de bord de fuite peuvent être croissants radialement en allant de la plateforme vers le sommet de l'aube.

Cet espacement peut être défini par la distance, ou largeur du dièdre, entre les parois d'intrados et d'extrados à une distance du bord de fuite prédéfinie, par exemple égale à 5 mm, voire 6 mm ou encore 7 mm.

En outre, l'espacement entre les parois d'intrados et d'extrados et le rayon du congé de raccordement de bord de fuite peuvent préférentiellement être plus élevés dans la zone en pied d'aube que dans les zones en sommet d'aube et en milieu d'aube.

Par ailleurs, l'espacement entre les parois d'intrados et d'extrados et le rayon du congé de raccordement de bord de fuite peuvent être plus élevés dans la zone en milieu d'aube que dans la zone en sommet d'aube. En variante, l'espacement entre les parois d'intrados et d'extrados et le rayon du congé de raccordement de bord de fuite peuvent être plus élevés dans la zone en sommet d'aube que dans la zone en milieu d'aube.

Préférentiellement, l'aube peut être une aube mobile pour une roue mobile de turbine pour turbomachine, notamment de turbine haute pression.

Par ailleurs, l'invention a encore pour objet, selon un autre de ses aspects, une turbine pour turbomachine, caractérisée en ce qu'elle comporte au moins une roue mobile comprenant une pluralité d'aubes mobiles telles que celle définie précédemment, la turbine étant préférentiellement une turbine haute pression.

En outre, l'invention a également pour objet, selon un autre de ses aspects, une turbomachine, caractérisée en ce qu'elle comporte au moins une turbine telle que définie précédemment, la turbomachine étant préférentiellement une turbomachine à double corps.

L'aube, la turbine et la turbomachine selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
La figure 1 est une vue schématique en coupe axiale d'un exemple de turboréacteur à double flux convenant à la mise en oeuvre de l'invention,
La figure 2 représente, selon une vue partielle de côté, un premier exemple de bord de fuite d'une aube de turbine conforme à l'invention,
La figure 3 représente, selon une vue partielle de côté, un deuxième exemple de bord de fuite d'une aube de turbine conforme à l'invention,
Les figures 4A, 4B et 4C représentent respectivement la coupe A en sommet d'aube du dièdre de la figure 5, la coupe B en milieu d'aube du dièdre de la figure 5, et la coupe C en pied d'aube du dièdre de la figure 5,
La figure 5 représente, schématiquement en perspective, le dièdre obtenu au niveau du bord de fuite d'une aube de turbine conforme à l'invention, formé par les plans des faces intrados et extrados de l'aube réunis au niveau du bord de fuite par le biais d'un congé de raccordement de bord de fuite,
La figure 6 représente, selon une vue partielle de côté, un troisième exemple de bord de fuite d'une aube de turbine conforme à l'invention, et
La figure 7 illustre, sous forme graphique, l'évolution radiale du rayon du congé de raccordement de bord de fuite.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

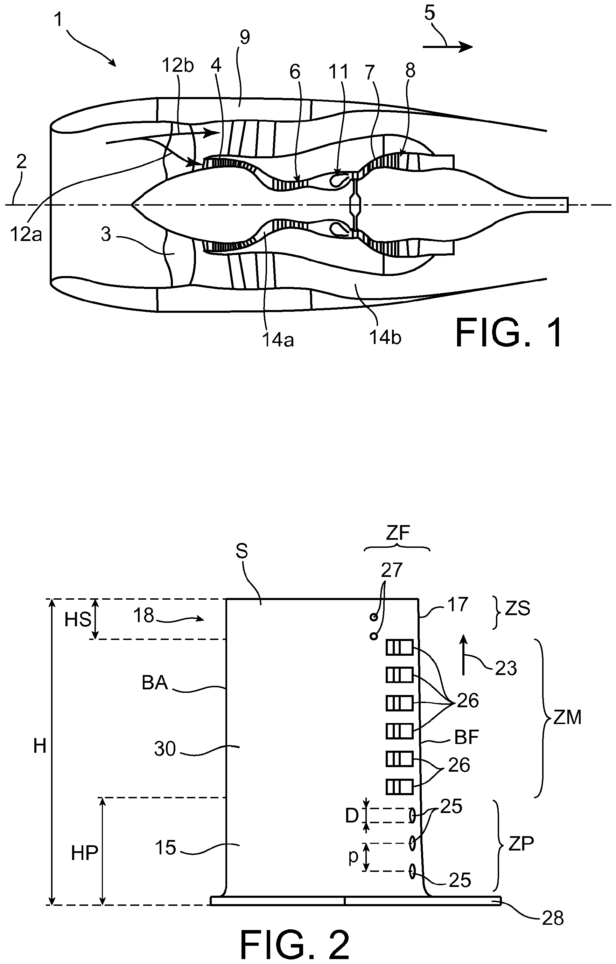

Dans toute la description, il est noté que l'on appelle axe 2 de la turbomachine 1, l'axe de symétrie radiale de celle-ci (voir figure 1). La direction axiale de la turbomachine 1 correspond à l'axe de rotation 2 de la turbomachine 1. Une direction radiale de la turbomachine 1 est une direction perpendiculaire à l'axe 2 de la turbomachine 1. En outre, sauf précision contraire, les adjectifs et adverbes axial, radial, axialement et radialement sont utilisés en référence aux directions axiale et radiale précitées, et les termes intérieur (ou interne) et extérieur (ou externe) sont utilisés en référence à une direction radiale de sorte que la partie intérieure d'un élément est plus proche de l'axe 2 de la turbomachine 1 que la partie extérieure du même élément. De plus, il est noté que les termes amont et aval sont à considérer par rapport à une direction principale 5 d'écoulement normal des gaz (de l'amont vers l'aval) pour la turbomachine 1.

La figure 1 représente une turbomachine 1 d'aéronef, par exemple ici un turboréacteur à double flux et à double corps, laquelle présente un axe central longitudinal 2 autour duquel s'étendent ses différents composants. Elle comprend, d'amont en aval selon une direction principale 5 d'écoulement des gaz à travers cette turbomachine, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale 14a de circulation des gaz traversant les compresseurs 4, 6, la chambre de combustion 11 et les turbines 7, 8. Le flux secondaire 12b s'écoule quant à lui dans une veine secondaire 14b délimitée radialement vers l'extérieur par un carter moteur, entouré d'une nacelle 9.

De façon classique, la turbine haute pression 7 présente une alternance de roues mobiles et de distributeurs. Un distributeur comporte une pluralité d'aubes fixes, et une roue mobile comporte une pluralité d'aubes mobiles 18, comme visible sur la figure 2.

Les aubes mobiles 18 de turbine haute pression 7 peuvent être principalement refroidies, au niveau du bord de fuite, par le biais de perçages réalisés dans l'épaisseur du congé de raccordement de bord de fuite ou bien encore par le biais de fentes de refroidissement.

Ces deux technologies de refroidissement présentent des avantages et des inconvénients. Ainsi, les perçages réalisés dans l'épaisseur du congé de raccordement de bord de fuite présentent un bon compromis d'un point de vue thermomécanique. Ils permettent d'assurer un niveau thermique maîtrisé au niveau du bord de fuite. Cependant, cela nécessite de définir un bord de fuite du profil aérodynamique relativement épais compte-tenu des épaisseurs minimales de matière dans cette zone, ce qui a alors un effet défavorable sur le rendement aérodynamique du profil. En outre, les fentes en bord de fuite permettent de définir un dièdre aérodynamique relativement fin. D'un point de vue thermo-mécanique, elles sont cependant moins performantes que des perçages débouchant dans l'épaisseur du congé de raccordement de bord de fuite. En effet, l'air émis en entrée des fentes de bord de fuite pour refroidir par film le fond de fente se réchauffe au contact de l'air de la veine principale au cours du parcours du fond de fente.

Afin d'améliorer le refroidissement en bord de fuite et d'obtenir un profil aérodynamique amélioré de l'aube mobile 18, l'invention se propose de définir une triple configuration d'émission de l'air de refroidissement au niveau du bord de fuite associée à un dièdre en bord de fuite du profil aérodynamique évolutif selon la hauteur radiale, en fonction des besoins thermomécaniques locaux et pour maximiser le rendement aérodynamique.

La figure 2 représente ainsi, selon une vue partielle de côté, un premier exemple de refroidissement du bord de fuite BF d'une aube mobile 18 de turbine conforme à l'invention, pouvant équiper une turbine haute pression 7 de turboréacteur 1 tel que celui de la figure 1.

L'aube 18 comporte une plateforme intérieure 28 et une pale 30 s'étendant dans une direction radiale 23, en allant de l'intérieur vers l'extérieur en éloignement de la plateforme intérieure 28 et en se terminant par un sommet S d'aube.

De plus, de façon classique, la pale 30 comprend un bord d'attaque BA et un bord de fuite BF, situé en aval du bord d'attaque BA. La pale 30 comprend encore une paroi d'intrados 15 et une paroi d'extrados 16 reliant chacune le bord d'attaque BA au bord de fuite BF, la paroi d'intrados 15 et la paroi d'extrados 16 étant reliées entre elles au niveau du bord de fuite BF par un congé de raccordement de bord de fuite 17.

Conformément à l'invention, l'aube 18 comporte une zone de refroidissement ZF s'étendant le long du bord de fuite BF, laquelle comprend trois types distincts d'orifices de refroidissement 25, 26, 27 formés au travers de la paroi de la pale 30 pour permettre la circulation d'un flux de refroidissement depuis l'intérieur vers l'extérieur de la pale 30. Ces trois types d'orifices de refroidissement 25, 26, 27 sont espacés les uns des autres radialement entre la plateforme intérieure 28 et le sommet S.

Ainsi, dans la zone en pied d'aube ZP à proximité de la plateforme intérieure 28, qui est une zone particulièrement critique en mécanique, l'aube 18 comporte un premier type d'orifices de refroidissement 25 sous la forme de premiers orifices de refroidissement 25 formés dans l'épaisseur du congé de raccordement de bord de fuite 17 entre les parois d'intrados 15 et d'extrados 16.

Ces premiers orifices 25 sont ici réalisés sous la forme de perçages, préférentiellement de forme circulaire en section, les orifices 25 étant alors préférentiellement de forme cylindrique, ou encore de forme oblongue en section comme visible sur la figure 2. Ces premiers orifices 25 peuvent présenter une plus grande dimension radiale, notamment un diamètre D, compris entre 0,15 mm et 0,50 mm. Par ailleurs, le pas radial p de ces premiers orifices 25, correspondant à la dimension radiale entre deux premiers orifices adjacents 25 et mesuré du centre de la section de sortie d'un premier orifice 25 au centre de la section de sortie du premier orifice adjacent 25, est compris entre 1,5 et 5 fois la dimension radiale D d'un premier orifice 25, notamment son diamètre.

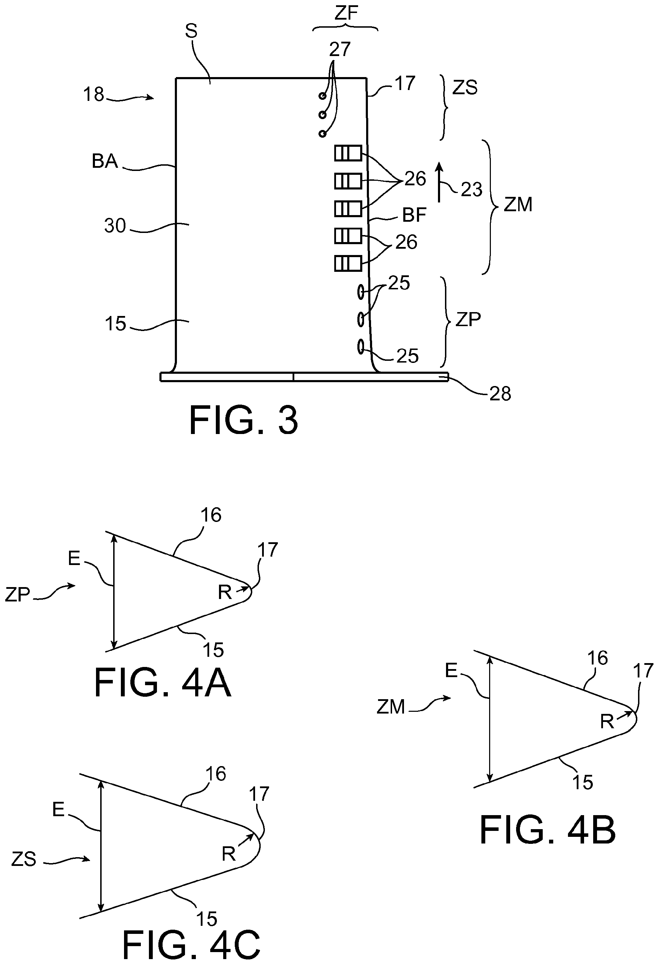

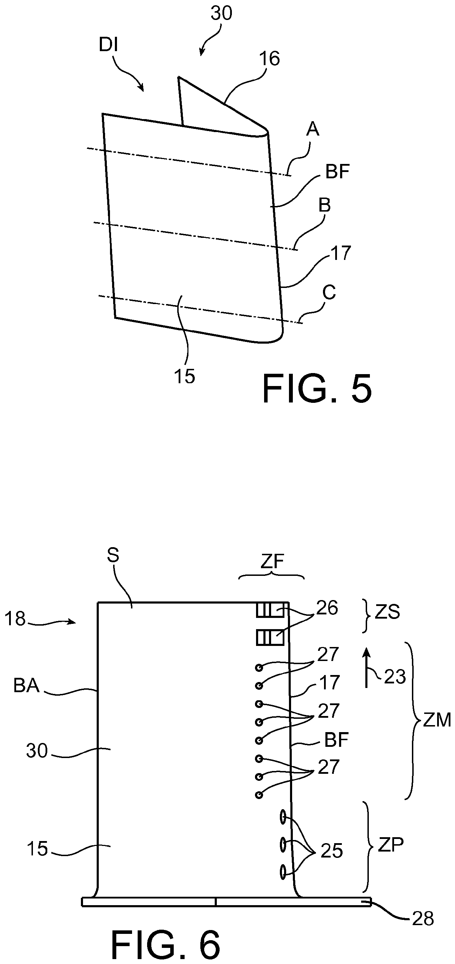

La réalisation de ces premiers orifices 25 permet entre autres d'assurer la présence d'une quantité de matière métallique importante. Le rayon R du congé de raccordement de bord de fuite 17 est donc important, et l'espacement E du dièdre DI est relativement épais, comme il sera décrit par la suite en référence aux figures 4A et 5.

En outre, dans la zone en sommet d'aube ZS à proximité du sommet S, l'aube 18 comporte un troisième type d'orifices de refroidissement 27 sous la forme de troisièmes orifices de refroidissement 27, distincts des premiers orifices 25, formés dans l'épaisseur de l'une au moins des parois d'intrados 15 et d'extrados 16, et préférentiellement ici dans l'épaisseur de la paroi d'intrados 15.

Ces troisièmes orifices de refroidissement 27 sont ici, dans l'exemple de la figure 2, réalisés sous la forme de perçages, notamment de forme circulaire en section. Ils permettent de définir un rayon R de congé de raccordement de bord de fuite 17 le plus faible possible et un dièdre DI avec un espacement E peu épais pour améliorer le rendement aérodynamique, comme expliqué par la suite en référence aux figures 4C et 5.

Enfin, dans la zone en milieu d'aube ZM, située entre la zone en pied d'aube ZP et la zone en sommet d'aube ZS, qui est aussi une zone sensible d'un point de vue thermomécanique, l'aube 18 comporte un deuxième type d'orifices de refroidissement 26 sous la forme de deuxièmes orifices de refroidissement 26, distincts des premiers orifices 25 et des troisièmes orifices 27, formés ici dans l'épaisseur de la paroi d'intrados 15.

Ces deuxièmes orifices de refroidissement 26 sont ici, dans l'exemple de la figure 2, sous la forme de fentes de refroidissement, notamment de forme rectangulaire ou oblongue en section. Ces deuxièmes orifices de refroidissement 26 sont situés axialement entre les troisièmes orifices 27, en amont, et les premiers orifices 25, en aval. Ils permettent d'obtenir un rayon R du congé de raccordement de bord de fuite 17 moins important qu'en pied d'aube et un dièdre DI d'espacement E moins épais qu'en pied d'aube.

Grâce à l'invention, en plus de permettre la définition d'un profil aérodynamique amélioré au niveau du congé de raccordement de bord de fuite 17 et du dièdre DI de bord de fuite, il est aussi possible de minimiser le débit de refroidissement utilisé pour refroidir le bord de fuite BF. En comparaison avec un bord de fuite classique refroidi par des fentes sur toute la hauteur radiale de l'aube, la solution de l'invention utilise un débit de refroidissement plus faible grâce à la présence notamment de simples perçages dans la paroi d'intrados 15 dans la zone du bord de fuite BF la moins contrainte d'un point de vue thermomécanique.

Dans le premier exemple de la figure 2, la zone en sommet d'aube ZS comporte deux troisièmes orifices 27 de refroidissement. Toutefois, ce nombre est variable. Par exemple, la figure 3 représente un deuxième exemple de réalisation selon une vue semblable à celle de la figure 2 dans lequel trois troisièmes orifices de refroidissement 27 sont présents.

Le meilleur compromis entre performance aérodynamique et tenue thermomécanique peut par exemple être obtenu par l'intégration de premiers orifices de refroidissement 25, préférentiellement sous la forme de perçages, tels que la hauteur radiale HP de la zone en pied d'aube ZP comprenant ces premiers orifices de refroidissement 25 soit inférieure ou égale à 20 %, de la hauteur radiale H de la pale 30, correspondant à la dimension radiale de la pale 30 entre la plateforme intérieure 28 et le sommet S, comme visible sur la figure 2. De plus, la hauteur radiale HS de la zone en sommet d'aube ZS comprenant les troisièmes orifices de refroidissement 27, préférentiellement sous forme de perçages, est alors inférieure ou égale à 30 % de la hauteur radiale H de la pale 30.

Néanmoins, en fonction de l'objectif recherché, il peut être possible de modifier cette répartition. Ainsi, pour augmenter significativement la durée de vie de la pale 20, la plage des premiers orifices 25 peut être augmentée jusqu'à 40 % de la hauteur totale H de la pale 30, au détriment de la performance aérodynamique.

Par ailleurs, il est à noter que si l'épaisseur de matière est suffisante en sommet d'aube ZS, les troisièmes orifices 27 peuvent comprendre éventuellement des orifices comportant une première partie de forme cylindrique et une deuxième partie de forme évasée comprenant des parois divergentes, s'apparentant ainsi à des orifices de refroidissement de type « fan-shaped hole » selon l'appellation anglo-saxonne, pour maximiser l'efficacité de refroidissement dans la zone.

Les figures 4A, 4B, 4C et 5 permettent en outre d'illustrer la configuration de profil aérodynamique optimisé obtenue par le biais de l'invention au niveau du bord de fuite BF de l'aube mobile 18 de turbine.

Ainsi, la zone de refroidissement ZF du bord de fuite BF, la paroi d'intrados 15, la paroi d'extrados 16 et le congé de raccordement de bord de fuite 17 définissent sensiblement ensemble un dièdre DI, présentant globalement la forme d'un dièdre DI, visible sur la figure 5, dont la forme est caractérisée par le rayon R du congé de raccordement de bord de fuite 17 et l'espacement E, à l'opposé du bord de fuite BF, entre la paroi d'intrados 15 et la paroi d'extrados 16, visibles sur les figures 4A, 4B et 4C. Avantageusement, l'espacement E entre les parois d'intrados 15 et d'extrados 16 et le rayon R du congé de raccordement de bord de fuite 17 sont évolutifs radialement entre la plateforme intérieure 28 et le sommet S de l'aube 18.

Plus spécifiquement, dans la zone en pied d'aube ZP, comme visible sur la figure 4A, l'espacement E est épais et la valeur du rayon R est élevée. En particulier, cet espacement E entre les parois d'intrados 15 et d'extrados 16 et le rayon R du congé de raccordement de bord de fuite 17 sont plus élevés dans cette zone en pied d'aube ZP que dans les zones en sommet d'aube ZS et en milieu d'aube ZM.

Dans la zone en milieu d'aube ZM, comme visible sur la figure 4B, le dièdre DI est moins épais et la valeur du rayon R est moins élevé qu'en pied d'aube. Précisément, l'espacement E entre les parois d'intrados 15 et d'extrados 16 et le rayon R du congé de raccordement de bord de fuite 17 sont plus élevés dans la zone en milieu d'aube ZM que dans la zone en sommet d'aube ZS.

Enfin, dans la zone en sommet d'aube ZS, comme visible sur la figure 4C, le dièdre DI est fin et la valeur du rayon R est petite.

Ainsi, par rapport à un profil aérodynamique de référence dessiné pour une aube de turbine haute pression refroidie par des fentes en bord de fuite, la solution de l'invention augmente le rayon R du congé de raccordement de bord de fuite 17 de 30 à 100 %, dans la zone en pied d'aube ZP, et diminue le rayon R du congé de raccordement de bord de fuite 17 de 10 à 50 % dans la zone en sommet d'aube ZS.

La solution de l'invention peut en outre être modulée en fonction de la situation thermomécanique locale de l'aube 18 sur laquelle elle est appliquée. Par exemple, le nombre de deuxièmes orifices 26, notamment sous forme de fentes, en milieu d'aube peut être adapté en fonction de la valeur de la température d'entrée de la turbine du moteur sur lequel la technologie est appliquée, ou bien encore lors d'une nouvelle conception ou design suite à la réalisation d'essais de thermo-coloration ou d'endurance de l'aube de turbine ayant mené à l'identification de points chauds locaux au niveau du bord de fuite.

Si la température d'entrée de turbine est relativement faible, le nombre de deuxièmes orifices 26, notamment sous forme de fentes, peut être réduit au profit de troisièmes orifices 27, notamment sous forme de perçages, qui permettent de définir un dièdre DI aérodynamique plus fin, favorable pour le rendement.

Si au contraire la température d'entrée de turbine est relativement élevée, le nombre de deuxièmes orifices 26, notamment sous forme de fentes, peut être augmenté pour assurer une situation thermomécanique saine dans la zone, au détriment du rendement aérodynamique.

Dans ce cas, le profil aérodynamique est plus fin au niveau du bord de fuite BF, en termes d'épaisseur du dièdre DI et de valeur du rayon R du congé de raccordement de bord de fuite 17, en milieu d'aube ZM qu'en sommet d'aube ZS. La figure 6 représente ainsi un troisième exemple de réalisation de l'aube 18 dans lequel les deuxièmes orifices 26 sont sous la forme de perçages circulaires formés dans la paroi d'intrados 15 et les troisièmes orifices 27 sont sous la forme de fentes de refroidissement. Dans ce cas, l'espacement E entre les parois d'intrados 15 et d'extrados 16 et le rayon R du congé de raccordement de bord de fuite 17 sont plus élevés dans la zone en sommet d'aube ZS que dans la zone en milieu d'aube ZM.

Par ailleurs, à partir de l'exemple de réalisation décrit précédemment en référence à la figure 2, il est possible de déterminer une valeur moyenne V_{moy}, une valeur minimale Vₘᵢₙ et une valeur maximale Vₘₐₓ d'évolution radiale du rayon R du congé de raccordement de bord de fuite 17. Ces valeurs sont déterminées pour un cas où la hauteur HP représente 20 % de la hauteur totale H de l'aube tandis que la hauteur HS représente 30 % de la hauteur totale H de l'aube.

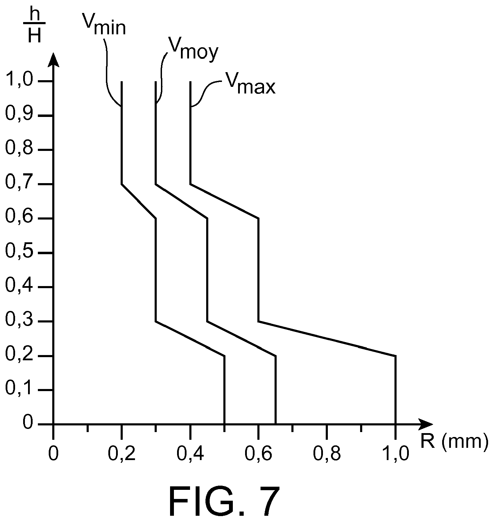

La figure 7 représente le rapport h/H en fonction du rayon R du congé de raccordement de bord de fuite 17, où h correspond à la hauteur radiale considérée pour l'observation de la valeur du rayon R prise à partir de la plateforme intérieure 28.

Par ailleurs, les valeurs Vₘᵢₙ, V_{moy} et Vₘₐₓ obtenues sont figurées dans le tableau 1 ci-dessous.

**Tableau 1 : Evolution radiale de la valeur du rayon R du congé bord de fuite**

| h/H | Vₘᵢₙ (mm) | V_{moy} (mm) | Vₘₐₓ (mm) |
|---|---|---|---|
| 0 | 0,5 | 0,75 | 1 |
| 0,1 | 0,5 | 0,75 | 1 |
| 0,2 | 0,5 | 0,75 | 1 |
| 0,3 | 0,3 | 0,45 | 0,6 |
| 0,4 | 0,3 | 0,45 | 0,6 |
| 0,5 | 0,3 | 0,45 | 0,6 |
| 0,6 | 0,3 | 0,45 | 0,6 |
| 0,7 | 0,2 | 0,3 | 0,4 |
| 0,8 | 0,2 | 0,3 | 0,4 |
| 0,9 | 0,2 | 0,3 | 0,4 |
| 1 | 0,2 | 0,3 | 0,4 |

On constate ainsi, que dans l'exemple de la figure 2, le rayon R est décroissant dans la direction radiale en allant depuis la plateforme intérieure 28 vers le sommet d'aube S, ce qui permet d'améliorer le rendement.

Bien entendu, l'invention n'est pas limitée aux exemples de réalisation qui viennent d'être décrit. Diverses modifications peuvent y être apportées par l'homme du métier. L'invention est définie par les revendications annexées.

## Revendications

1. Aube (18) de turbine (7) de turbomachine, destinée à être montée autour d'un axe de rotation (2), comportant une plateforme (28) et une pale (30) s'étendant dans une direction radiale (23) par rapport à l'axe de rotation (2), en allant de l'intérieur vers l'extérieur en éloignement de la plateforme (28) et en se terminant par un sommet (S), la pale (30) comprenant un bord d'attaque (BA) et un bord de fuite (BF), situé en aval du bord d'attaque (BA), et la pale (30) comprenant une paroi d'intrados (15) et une paroi d'extrados (16) reliant chacune le bord d'attaque (BA) au bord de fuite (BF), la paroi d'intrados (15) et la paroi d'extrados (16) étant reliées entre elles au niveau du bord de fuite (BF) par un congé de raccordement de bord de fuite (17),
**caractérisée en ce qu'**elle comporte, une zone de refroidissement (ZF) qui s'étend le long du bord de fuite (BF), la zone de refroidissement (ZF) comprenant trois types distincts d'orifices de refroidissement (25, 26, 27) formés au travers de la paroi de la pale (30) pour permettre la circulation d'un flux de refroidissement depuis l'intérieur vers l'extérieur de la pale (30), ces trois types d'orifices de refroidissement (25, 26, 27) étant espacés les uns des autres radialement entre la plateforme (28) et le sommet (S),
**en ce que** l'aube (18) comporte, dans la zone en pied d'aube (ZP) à proximité de la plateforme (28), un premier type d'orifices de refroidissement (25) sous la forme de premiers orifices de refroidissement (25) formés dans l'épaisseur du congé de raccordement de bord de fuite (17) entre les parois d'intrados (15) et d'extrados (16),
**en ce que** l'aube (18) comporte, dans la zone en sommet d'aube (ZS) à proximité du sommet (S), un troisième type d'orifices de refroidissement (27) sous la forme de troisièmes orifices de refroidissement (27), distincts des premiers orifices (25), formés dans l'épaisseur de l'une au moins des parois d'intrados (15) et d'extrados (16),
**en ce que** l'aube (18) comporte, dans la zone en milieu d'aube (ZM), située entre la zone en pied d'aube (ZP) et la zone en sommet d'aube (ZS), un deuxième type d'orifices de refroidissement (26) sous la forme de deuxièmes orifices de refroidissement (26), distincts des premiers orifices (25) et des troisièmes orifices (27), formés dans l'épaisseur de ladite l'une au moins des parois d'intrados (15) et d'extrados (16),
**en ce que**, la zone de refroidissement (ZF) du bord de fuite (BF), la paroi d'intrados (15), la paroi d'extrados (16) et le congé de raccordement de bord de fuite (17) présentent globalement la forme d'un dièdre (DI) dont la forme est **caractérisée par** le rayon (R) du congé de raccordement de bord de fuite (17) et l'espacement (E), à l'opposé du bord de fuite (BF), entre la paroi d'intrados (15) et la paroi d'extrados (16), ledit espacement (E) étant défini par la distance entre les parois d'intrados (15) et d'extrados (16) à une distance du bord de fuite (BF) prédéfinie, et **en ce que** l'espacement (E) entre les parois d'intrados (15) et d'extrados (16) et le rayon (R) du congé de raccordement de bord de fuite (17) sont évolutifs radialement entre la plateforme (28) et le sommet (S) de l'aube (18), les valeurs de l'espacement (E) et du rayon (R) du congé de raccordement de bord de fuite (17) évoluant dans la direction radiale.

2. Aube selon la revendication 1, dans laquelle les deuxièmes (26) et troisièmes (27) orifices de refroidissement sont formés dans l'épaisseur de la paroi d'intrados (15).

3. Aube selon la revendication 1 ou 2, dans laquelle les premiers (25), les deuxièmes (26) et les troisièmes (27) orifices de refroidissement comportent chacun un type différent d'orifices de refroidissement choisi parmi des perçages de forme circulaire en section, ou de forme oblongue en section, ou sous forme de fente.

4. Aube selon l'une quelconque des revendications précédentes, dans laquelle la hauteur radiale (HP) de la zone en pied d'aube (ZP) comprenant les premiers orifices de refroidissement (25) est inférieure ou égale à 40 %, notamment 20 %, de la hauteur radiale (H) de la pale (30), correspondant à la dimension radiale de la pale (30) entre la plateforme (28) et le sommet (S).

5. Aube selon l'une quelconque des revendications précédentes, dans laquelle la hauteur radiale (HS) de la zone en sommet d'aube (ZS) comprenant les troisièmes orifices de refroidissement (27) est inférieure ou égale à 30 % de la hauteur radiale (H) de la pale (30), correspondant à la dimension radiale de la pale (30) entre la plateforme (28) et le sommet (S).

6. Aube selon l'une quelconque des revendications précédentes, dans laquelle l'espacement (E) entre les parois d'intrados (15) et d'extrados (16) et le rayon (R) du congé de raccordement de bord de fuite (17) sont croissants radialement en allant de la plateforme (28) vers le sommet (S) de l'aube (18).

7. Aube selon l'une quelconque des revendications 1 à 5, dans laquelle l'espacement (E) entre les parois d'intrados (15) et d'extrados (16) et le rayon (R) du congé de raccordement de bord de fuite (17) sont plus élevés dans la zone en pied d'aube (ZP) que dans les zones en sommet d'aube (ZS) et en milieu d'aube (ZM).

8. Aube selon l'une quelconque des revendications précédentes, dans laquelle l'aube est une aube mobile (18) pour une roue mobile de turbine (7) pour turbomachine, notamment de turbine haute pression.

9. Turbine (7) pour turbomachine qui comporte au moins une roue mobile comprenant une pluralité d'aubes mobiles (18) selon l'une quelconque des revendications précédentes, la turbine étant préférentiellement une turbine haute pression.

10. Turbomachine (1) qui comporte au moins une turbine selon la revendication 9, la turbomachine étant préférentiellement une turbomachine à double corps.

## Patentansprüche

1. Schaufel (18) der Turbine (7) einerTurbomaschine, die dazu bestimmt ist, um eine Rotationsachse (2) herum befestigt zu werden, eine Plattform (28) beinhaltend und einen Flügel (30), der sich in einer radialen Richtung (23) relativ zur Rotationsachse (2) erstreckt, von innen nach außen und sich von der Plattform (28) entfernend und in einem Scheitelpunkt (S) endend, wobei der Flügel (30) eine Anströmkante (BA) umfasst und eine Abströmkante (BF), die stromabwärts von der Anströmkante (BA) angeordnet ist, und wobei der Flügel (30) eine Innenwölbungswand (15) und eine Außenwölbungswand (16) umfasst, die jeweils die Anströmkante (BA) mit der Abströmkante (BF) verbinden, wobei die Innenwölbungswand (15) und die Außenwölbungswand (16) an der Abströmkante (BF) durch eine Abströmkantenverrundung (17) miteinander verbunden sind,
**dadurch gekennzeichnet, dass** sie einen Kühlbereich (ZF) beinhaltet, der sich entlang der Abströmkante (BF) erstreckt, wobei der Kühlbereich (ZF) drei unterschiedliche Arten von Kühlöffnungen (25, 26, 27) umfasst, die durch die Wand des Flügels (30) hindurch ausgebildet sind, um die Zirkulation eines Kühlstroms von der Innenseite zur Außenseite des Flügels (30) zu ermöglichen, wobei diese drei Arten von Kühlöffnungen (25, 26, 27) radial zwischen der Plattform (28) und dem Scheitelpunkt (S) voneinander beabstandet sind,
dadurch, dass die Schaufel (18) im Schaufelfußbereich (ZP) in der Nähe der Plattform (28) eine erste Art von Kühlöffnungen (25) in Form von ersten Kühlöffnungen (25) beinhaltet, die in der Dicke der Abströmkantenverrundung (17) zwischen der Innenwölbungs- (15) und Außenwölbungswand (16) ausgebildet sind,
dadurch, dass die Schaufel (18) im Schaufelscheitelbereich (ZS) in der Nähe des Scheitelpunkts (S) eine dritte Art von Kühlöffnungen (27) in Form von dritten Kühlöffnungen (27) beinhaltet, die sich von den ersten Öffnungen (25) unterscheiden, und in der Dicke mindestens einer der Innenwölbungs- (15) und Außenwölbungswand (16) ausgebildet sind,
dadurch, dass die Schaufel (18) im Schaufelmittenbereich (ZM), der zwischen dem Schaufelfußbereich (ZP) und dem Schaufelscheitelbereich (ZS) angeordnet ist, eine zweite Art von Kühlöffnungen (26) in Form von zweiten Kühlöffnungen (26) beinhaltet, die sich von den ersten Öffnungen (25) und den dritten Öffnungen (27), die in der Dicke der mindestens einen der Innenwölbungs-(15) und Außenwölbungswand (16) ausgebildet sind, unterscheiden,
dadurch, dass der Kühlbereich (ZF) die Abströmkante (BF), die Innenwölbungswand (15), die Außenwölbungswand (16) und die Abströmkantenverrundung (17) insgesamt die Form eines Dieders (DI) aufweisen, dessen Form durch den Radius (R) der Abströmkantenverrundung (17) und den Abstand (E) gegenüber der Abströmkante (BF) zwischen der Innenwölbungswand (15) und der Außenwölbungswand (16) gekennzeichnet ist, wobei der Abstand (E) durch die Distanz zwischen der Innenwölbungs- (15) und Außenwölbungswand (16) in einer vordefinierten Distanz von der Abströmkante (BF) definiert ist, und dadurch, dass der Abstand (E) zwischen der Innenwölbungs- (15) und Außenwölbungswand (16) und dem Radius (R) der Abströmkantenverrundung (17) radial zwischen der Plattform (28) und dem Scheitelpunkt (S) der Schaufel (18) veränderbar ist, wobei sich die Werte des Abstands (E) und des Radius (R) der Abströmkantenverrundung (17) in radialer Richtung verändern.

2. Schaufel nach Anspruch 1, wobei die zweiten (26) und dritten (27) Kühlöffnungen in der Dicke der Innenwölbungswand (15) ausgebildet sind.

3. Schaufel nach Anspruch 1 oder 2, wobei die ersten (25), zweiten (26) und dritten (27) Kühlöffnungen jeweils eine andere Art von Kühlöffnungen beinhalten, die aus Bohrungen mit kreisförmiger Querschnittsform, länglicher Querschnittsform oder Schlitzform ausgewählt sind.

4. Schaufel nach einem der vorhergehenden Ansprüche, wobei die radiale Höhe (HP) des Schaufelfußbereichs (ZP), der die ersten Kühlöffnungen (25) umfasst, kleiner oder gleich 40 %, insbesondere 20 %, der radialen Höhe (H) des Flügels (30) ist, entsprechend der radialen Abmessung des Flügels (30) zwischen der Plattform (28) und dem Scheitelpunkt (S).

5. Schaufel nach einem der vorhergehenden Ansprüche, wobei die radiale Höhe (HS) des Schaufelscheitelbereichs (ZS), der die dritten Kühlöffnungen (27) umfasst, kleiner oder gleich 30 % der radialen Höhe (H) des Flügels (30) ist, entsprechend der radialen Abmessung des Flügels (30) zwischen der Plattform (28) und dem Scheitelpunkt (S).

6. Schaufel nach einem der vorhergehenden Ansprüche, wobei der Abstand (E) zwischen der Innenwölbungs- (15) und Außenwölbungswand (16) und dem Radius (R) der Abströmkantenverrundung (17) radial zunimmt von der Plattform (28) zum Scheitelpunkt (S) der Schaufel (18) laufend.

7. Schaufel nach einem der Ansprüche 1 bis 5, wobei der Abstand (E) zwischen der Innenwölbungs- (15) und Außenwölbungswand (16) und dem Radius (R) der Abströmkantenverrundung (17) im Schaufelfußbereich (ZP) größer ist als im Schaufelscheitelbereich (ZS) und in der Schaufelmitte (ZM).

8. Schaufel nach einem der vorhergehenden Ansprüche, wobei die Schaufel eine bewegliche Schaufel (18) für ein bewegliches Rad einer Turbine (7) für eine Turbomaschine ist, insbesondere eine Hochdruckturbine.

9. Turbine (7) für eine Turbomaschine, die mindestens ein bewegliches Rad beinhaltet, das eine Vielzahl beweglicher Schaufeln (18) nach einem der vorhergehenden Ansprüche umfasst, wobei die Turbine bevorzugterweise eine Hochdruckturbine ist.

10. Turbomaschine (1), die mindestens eine Turbine nach Anspruch 9 beinhaltet, wobei die Turbomaschine bevorzugterweise eine Turbomaschine mit Doppelkammer ist.

## Claims

1. A turbomachine turbine (7) blade (18), intended to be mounted around an axis of rotation (2), including a platform (28) and a vane (30) extending in a radial direction (23) relative to the axis of rotation (2), going from the inside to the outside away from the platform (28) and ending in a top (S), the vane (30) comprising a leading edge (BA) and a trailing edge (BF), located downstream of the leading edge (BA), and the vane (30) comprising a lower surface wall (15) and an upper surface wall (16) each connecting the leading edge (BA) to the trailing edge (BF), the lower surface wall (15) and the upper surface wall (16) being connected to each other at the trailing edge (BF) by a trailing edge fillet (17),
**characterised in that** it includes a cooling area (ZF) which extends along the trailing edge (BF), the cooling area (ZF) comprising three distinct types of cooling orifices (25, 26, 27) formed through the wall of the vane (30) to allow the circulation of a cooling flow from the inside to the outside of the vane (30), these three types of cooling orifices (25, 26, 27) being spaced from each other radially between the platform (28) and the top (S),
**in that** the blade (18) includes, in the area at the root of the blade (ZP) close to the platform (28), a first type of cooling orifices (25) in the form of first cooling orifices (25) formed in the thickness of the trailing edge fillet (17) between the lower surface (15) and upper surface (16) walls,
**in that** the blade (18) includes, in the area at the top of the blade (ZS) close to the top (S), a third type of cooling orifices (27) in the form of third cooling orifices (27), distinct from the first orifices (25), formed in the thickness of at least one of the lower surface (15) and upper surface (16) walls,
**in that** the blade (18) includes, in the area in the middle of the blade (ZM), located between the area at the root of the blade (ZP) and the area at the top of the blade (ZS), a second type of cooling orifices (26) in the form of second cooling orifices (26), distinct from the first orifices (25) and from the third orifices (27), formed in the thickness of said at least one of the lower surface (15) and upper surface (16) walls,
**in that**, the cooling area (ZF) of the trailing edge (BF), the lower surface wall (15), the upper surface wall (16) and the trailing edge fillet (17) generally have the shape of a dihedral (DI) the shape of which is **characterised by** the radius (R) of the trailing edge fillet (17) and the spacing (E), opposite the trailing edge (BF), between the lower surface wall (15) and the upper surface wall (16), said spacing (E) being defined by the distance between the lower surface (15) and upper surface (16) walls at a predefined distance from the trailing edge (BF), and **in that** the spacing (E) between the lower surface (15) and upper surface (16) walls and the radius (R) of the trailing edge fillet (17) are radially changing between the platform (28) and the top (S) of the blade (18), the values of the spacing (E) and the radius (R) of the trailing edge fillet (17) changing in the radial direction.

2. The blade according to claim 1, in which the second (26) and third (27) cooling orifices are formed in the thickness of the lower surface wall (15).

3. The blade according to claim 1 or 2, in which the first (25), the second (26) and the third (27) cooling orifices each include a different type of cooling orifice selected from drillings of cross-sectional circular shape, or of cross-sectional oblong shape, or in the shape of a slot.

4. The blade according to any one of the preceding claims, in which the radial height (HP) of the area at the root of the blade (ZP) comprising the first cooling orifices (25) is less than or equal to 40%, in particular 20% of the radial height (H) of the vane (30), corresponding to the radial dimension of the vane (30) between the platform (28) and the top (S).

5. The blade according to any one of the preceding claims, in which the radial height (HS) of the area at the top of the blade (ZS) comprising the third cooling orifices (27) is less than or equal to 30% of the radial height (H) of the vane (30), corresponding to the radial dimension of the vane (30) between the platform (28) and the top (S).

6. The blade according to any one of the preceding claims, in which the spacing (E) between the lower surface (15) and upper surface (16) walls and the radius (R) of the trailing edge fillet (17) are radially increasing from the platform (28) to the top (S) of the blade (18).

7. The blade according to any one of claims 1 to 5, in which the spacing (E) between the lower surface (15) and upper surface (16) walls and the radius (R) of the fillet trailing edge (17) are greater in the area at the root of the blade (ZP) than in the areas at the top of the blade (ZS) and in the middle of the blade (ZM).

8. The blade according to any one of the preceding claims, in which it is a moving blade (18) for a moving turbine wheel (7) for a turbomachine, in particular a high pressure turbine.

9. A turbine (7) for a turbomachine which includes at least one moving wheel comprising a plurality of moving blades (18) according to any one of the preceding claims, the turbine preferably being a high pressure turbine.

10. A turbomachine (1) which includes at least one turbine according to claim 9, the turbomachine preferably being a twin-spool turbomachine.
